# EUROPEAN PATENT APPLICATION

(11) **EP 4 704 402 A1**
(43) Date of publication of application: **04.03.2026**
(21) Application number: 24796578.3
(22) Date of filing: 07.03.2024
(51) Int. Cl.: H04L 47/56, H04L 12/28, H04L 47/62

(54) **NETWORK DEVICE, SCHEDULING METHOD, PROGRAM, AND NODE GRAPH DISPLAY METHOD**

(30) Priority: 27.04.2023 JP 2023073511
(71) Applicant: Panasonic Intellectual Property Management Co., Ltd., Kadoma-shi, Osaka 571-0057 (JP)
(72) Inventor: SHIRAKATA, Naganori, Kadoma-shi, Osaka 571-0057 (JP); SAKAMOTO, Takenori, Kadoma-shi, Osaka 571-0057 (JP)
(74) Representative: Novagraaf International SA
(86) International application number: PCT/JP2024/008739
(87) International publication number: WO 2024/224820

(57) **Abstract**

A network device constituting a network includes: a reception unit that receives, from an upstream network device, restriction information about restrictions on transmission and reception of a packet; and a control unit that, in the case when the transmission timings for a plurality of packets to be transmitted to a downstream network device overlap each other, determines the transmission order of the plurality of packets on the basis of restriction information for each of said packets. If the restriction information for the packets cannot be satisfied in determining the transmission order, the control unit requests the upstream network device to make a change to the restriction information.

## Description

### Technical Field

The present disclosure relates to a network device, a scheduling method, a program, and a node graph display method.

### Background Art

As a technique for guaranteeing real-time communication between Factory Automation (FA) devices, such as manufacturing apparatuses and production lines in factories, the introduction of Ethernet (registered trademark) based Time Sensitive Networking (TSN) has been discussed.

Patent Literature (hereinafter, may be referred to as "PTL") 1 discloses a technique for performing a transmission path and scheduling of a data stream between a talker device and a listener device, using a Stream Reservation Protocol (SRP) and a Time Aware Shaper (TAS), which are one TSN scheme.

### Citation List

### Patent Literature

PTL 1
Japanese Unexamined Patent Application Publication (Translation of PCT Application) No. 2021-536708

### Summary of Invention

It is, however, difficult for a network device that constitutes a TSN network and determines scheduling of traffic and a transmission path to perform scheduling while observing a data stream in an entire network and understanding a state of a timing conflict in the entire network. For this reason, the network device cannot appropriately schedule the data stream in some cases.

One non-limiting exemplary embodiment of the present disclosure facilitates providing a network device, a scheduling method, a program, and a node graph display method each capable of appropriately scheduling a data stream of a network.

A network device according to one example of the present disclosure is a network device constituting a network, the network device including: a receiver that receives, from an upstream network device, constraint information related to a constraint of transmission and reception of a packet; and a controller that determines, when transmission timings of a plurality of packets to be transmitted to a downstream network device overlap with each other, a transmission order of the plurality of packets, based on the constraint information of each of the plurality of packets, in which, the controller requests an upstream network device to change the constraint information, when satisfying the constraint information of the plurality of packets is impossible, in determining the transmission order.

A scheduling method according to one example of the present disclosure is a scheduling method for a network device constituting a network, the scheduling method including: receiving, from an upstream network device, constraint information related to a constraint of transmission and reception of a packet; determining, when transmission timings of a plurality of packets to be transmitted to a downstream network device overlap with each other, a transmission order of the plurality of packets based on the constraint information of each of the plurality of packets; and requesting an upstream network device to change the constraint information, when satisfying the constraint information of the plurality of packets is impossible, in the determining of the transmission order.

A program according to one example of the present disclosure is a program for a network device constituting a network, the program causing a processor to execute processing including: receiving, from an upstream network device, constraint information related to a constraint of transmission and reception of a packet; determining, when transmission timings of a plurality of packets to be transmitted to a downstream network device overlap with each other, a transmission order of the plurality of packets based on the constraint information of each of the plurality of packets; and requesting an upstream network device to change the constraint information, when satisfying the constraint information of the plurality of packets is impossible, in the determining of the transmission order.

A node graph display method according to one example of the present disclosure includes: displaying a node graph of a network device constituting a network; displaying a timing chart of an input packet of the network device selected on the node graph; displaying a timing chart of an output packet in a transmission order determined based on constraint information related to a constraint of transmission and reception of the input packet; and displaying, on the node graph, an indication path of a request to change the constraint information transmitted by the network device not capable of satisfying the constraint information of the input packet, in determining the transmission order of the output packet.

It should be noted that general or specific embodiments may be implemented as a system, a method, an integrated circuit, a computer program, a storage medium, or any selective combination thereof.

According to one example of the present disclosure, a network device can appropriately schedule a data stream of a network.

Additional benefits and advantages of one example of the present disclosure will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 is a diagram illustrating an example of a network system in an embodiment of the present disclosure;
FIG. 2 is a diagram illustrating a block configuration example of a network device constituting the network system in FIG. 1;
FIG. 3 is a diagram illustrating a detailed block configuration example of a switch;
FIG. 4 is a diagram illustrating examples of timing charts of input packets and output packets;
FIG. 5 is a diagram illustrating an example of a node graph of the network system in FIG. 1;
FIG. 6 is a diagram illustrating a data configuration example of stream information;
FIG. 7 is a flowchart illustrating an operation example of the switch;
FIG. 8 is a flowchart illustrating a detailed operation example of S704 in FIG. 7;
FIG. 9 is a diagram illustrating a sequence example in which no constraint relaxation request is made;
FIG. 10 is a diagram illustrating a sequence example in which a constraint relaxation request is made between switches;
FIG. 11 is a diagram illustrating a sequence example in which a constraint relaxation request is made to a talker; and
FIG. 12 is a diagram illustrating an example of a user interface.

### Description of Embodiments

Hereinafter, embodiments of the present disclosure will be described in detail with reference to the accompanying drawings as appropriate. However, a detailed description more than necessary may be omitted, such as a detailed description of an already well-known matter and a duplicated description for a substantially identical configuration, to avoid the following description becoming unnecessarily redundant and to facilitate understanding by those skilled in the art.

Note that, the accompanying drawings and the following description are provided for those skilled in the art to sufficiently understand the present disclosure, and are not intended to limit the subject matter described in the claims.

### <System Configuration Diagram>

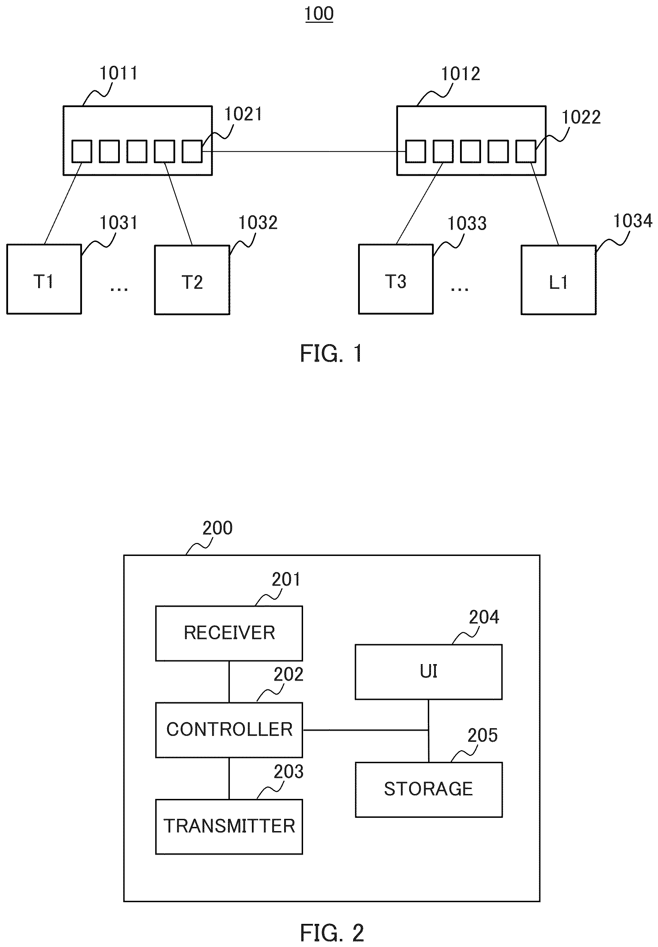

FIG. 1 is a diagram illustrating an example of network system 100 in an embodiment of the present disclosure. Network system 100 is a network system in which TSN is introduced. As illustrated in FIG. 1, network system 100 includes switches 1011 and 1012, talkers 1031 to 1033, and listener 1034. Switches 1011 and 1012, talkers 1031 to 1033, and listener 1034 are connected to each other through, for example, Ethernet. Network system 100 is built in, for example, a production line in a factory.

Switches 1011 and 1022 are network devices that relay a data stream (packet). Switch 1011 includes port 1021. Switch 1012 includes port 1022. Switches 1011 and 1012 relay a packet between ports 1021 and 1022, for example, by executing an application stored in a storage. The switch may be referred to as a relay node or a relay apparatus.

For example, port 1021 of switch 1011 outputs a packet input to a certain port 1021 from a certain port 1021 in accordance with a destination, a priority, and a predetermined schedule of the packet. Port 1022 of switch 1012 also outputs a packet input to a certain port 1022 from a certain port 1022 in accordance with a destination, a priority, and a predetermined schedule of the packet, like port 1021 of switch 1011.

Talkers 1031 to 1033 are network devices that are transmission sources of packets. Talkers 1031 to 1033 operate as the transmission sources of the packets by executing an application stored in a storage, for example.

Talkers 1031 to 1033 are, for example, devices including a Personal Computer (PC), Factory Automation (FA), such as a Programmable Logic Controller (PLC), a sensor and an actuator. Talkers 1031 to 1033 may be referred to as an end device, a transmission node, or a transmission apparatus.

Listener 1034 is a network device that is a reception destination of the packet. Listener 1034 operates as the reception destination of the packet by executing an application stored in a storage, for example.

Listener 1034 is, for example, a device, such as a PC, an FA including a PLC, a sensor or an actuator. Listener 1034 may be referred to as an end device, a reception node, or a reception apparatus.

Talkers 1031 to 1033 and listener 1034 include at least one port (not illustrated) and are connected to another network device.

Note that, one end device may operate as a talker and a listener. Further, one end device may operate as a plurality of talkers and/or a plurality of listeners.

### <Block Diagram>

FIG. 2 is a diagram illustrating a block configuration example of network device 200 constituting network system 100 in FIG. 1. As illustrated in FIG. 2, network device 200 includes receiver 201, controller 202, transmitter 203, User Interface (UI) 204, and storage 205.

Receiver 201 performs reception processing of a packet input from Ethernet connected to a port.

Controller 202 controls an entirety of network device 200. Controller 202 performs data processing based on the packet received by receiver 201.

Controller 202 may be composed of, for example, a processor, such as a central processing unit (CPU). Controller 202 may implement a function of network communication processing of the switch and/or the end device in accordance with a program (application) stored in storage 205.

Transmitter 203 performs transmission processing of outputting the packet generated based on the data processing in controller 202 to Ethernet connected to the port.

UI 204 is, for example, an input-output apparatus such as a key apparatus, a touch screen, and/or a display. UI 204 outputs a signal corresponding to an operation of a user to controller 202. UI 204 displays an image corresponding to the signal output from controller 202 on the display.

Storage 205 stores a program of an operating system (OS) and an application program to be executed by controller 202. Various types of data required for processing by controller 202 are stored in storage 205. Storage 205 may be, for example, a solid state drive (SSD), a random access memory (RAM), a flash memory, a read only memory (ROM), and/or a hard disk drive (HDD). Storage 205 may be one or more than one.

Network device 200 may not include UI 204 depending on a function of the network device. Network device 200 may be remotely connected to another device such as a PC, and the other device may provide a user interface for network device 200.

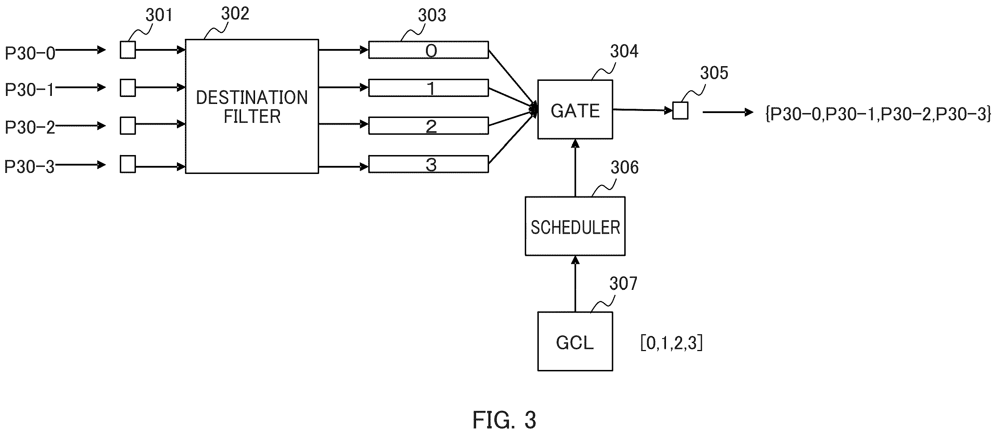

FIG. 3 is a diagram illustrating a detailed block configuration example of switch 1011. As illustrated in FIG. 3, switch 1011 includes input port 301, destination filter 302, queue 303, gate 304, output port 305, scheduler 306, and Gate Control List (GCL) 307. Switch 1012 also has the same block configuration as switch 1011.

Input port 301 may correspond to, for example, receiver 201 in FIG. 2. Destination filter 302, queue 303, gate 304, scheduler 306, and GCL 307 may correspond to, for example, controller 202 in FIG. 2. Output port 305 may correspond to, for example, transmitter 203 in FIG. 2. The correspondence relationships described above are only exemplary and actual correspondence relationships are not limited to the correspondence relationships described above. For example, input port 301 and destination filter 302 may correspond to receiver 201 in FIG. 2. For example, gate 304 and output port 305 may correspond to transmitter 203 in FIG. 2.

Input port 301 converts a signal from an Ethernet cable into a packet (packet data). For example, input ports 301 convert the signals from the Ethernet cable into packets P30-0, P30-1, P30-2, and P30-3 and output packets P30-0, P30-1, P30-2, and P30-3 to destination filter 302.

Destination filter 302 analyzes a header of a packet and determines to which queue of which output port the packet is output. In the example in FIG. 3, destination filter 302 outputs packets P30-0, P30-1, P30-2, and P30-3 to queues 303 of output port 305.

Further, destination filter 302 analyzes the headers of the packets and determines priorities of packets P30-0, P30-1, P30-2, and P30-3. Destination filter 302 outputs packets P30-0, P30-1, P30-2, and P30-3 to queues 303 corresponding to the determined priorities. The priority may be a priority related to a transmission order of the packets from output port 305.

Queues 303 hold the packets output from destination filter 302 based on First-In First-Out (FIFO). A plurality of queues 303 is provided for respective priorities. For example, queues 303 include a queue of "0" having the highest priority to a queue of "3" having the lowest priority. Queues 303 may be provided in accordance with the number of priorities. For example, when eight priorities are set, eight queues 303 may be provided.

Gate 304 outputs the packet output from queue 303 to output port 305 based on control of scheduler 306.

Output port 305 converts the packets output from gate 304 into an Ethernet signal and outputs the Ethernet signal to an Ethernet cable.

Scheduler 306 determines which packet held in which queue is output for when and how long based on an instruction (list) of GCL 307 and controls gate 304.

GCL 307 generates a list (GCL) for setting opening and closing of gate 304. The GCL includes information indicating which packet of which priority (queue) is output for when and how long.

For example, it is assumed that signals of packets P30-0, P30-1, P30-2, and P30-3 are input to input ports 301 from different talkers. It is assumed that packets P30-0, P30-1, P30-2, and P30-3 have higher priorities in this order. It is assumed that GCL 307 generates a GCL that outputs the packets in an order of priorities 0, 1, 2, and 3 (an output period is omitted herein).

In this case, packets P30-0, P30-1, P30-2, and P30-3 respectively output to queues 303 of 0, 1, 2, and 3 by destination filter 302. Scheduler 306 controls gate 304 such that packets P30-0, P30-1, P30-2, and P30-3 are output in this transmission order from output port 305 based on the GCL of GCL 307.

### <Timing Chart>

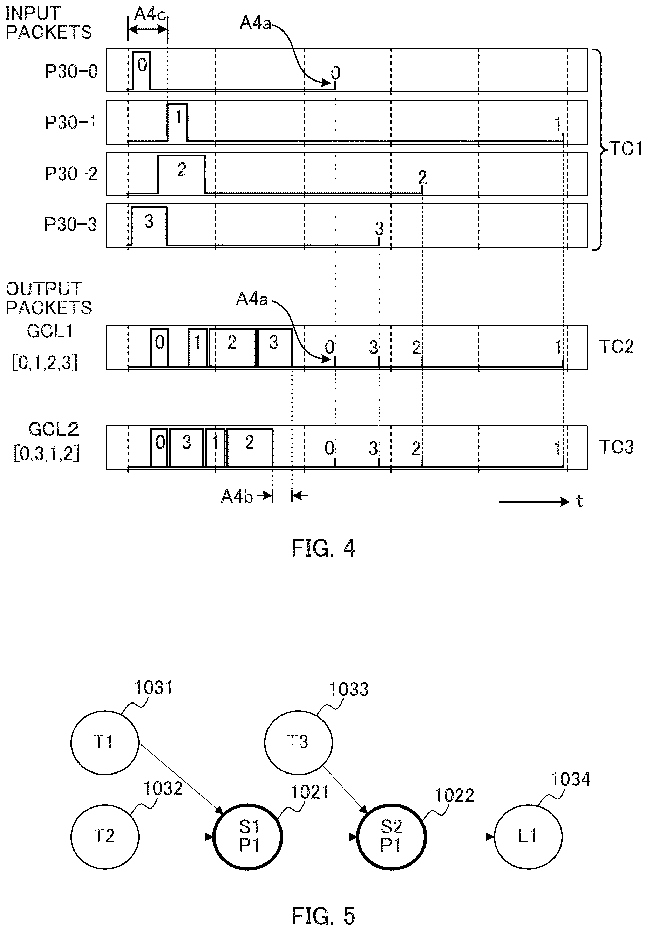

FIG. 4 is a diagram illustrating examples of timing charts of input packets and output packets. Timing chart TC1 in FIG. 4 illustrates a timing chart of packets input into the switch. Timing charts TC2 and TC3 illustrate timing charts of packets output from the switch.

A horizontal axis t illustrated in FIG. 4 denotes time. A period in which a rectangular wave is at High in timing chart TC1 indicates a period in which a packet is input into the switch. A period in which a rectangular wave is at High in timing charts TC2 and TC3 indicates a period in which the packet is output from the switch. A vertical line illustrated in arrow A4a in FIG. 4 denotes a desired arrival time of packet P30-0. Similarly, vertical lines in packets P30-1, P30-2, and P30-3 denote desired arrival times of packets P30-1, P30-2, and P30-3. The desired arrival time may be perceived as a deadline for the packet to arrive at the listener.

As illustrated in timing chart TC1, it is assumed that packets P30-0, P30-1, P30-2, and P30-3 are input into the switch. An arrival (a falling timing of a rectangular wave) order of packets P30-0, P30-1, P30-2, and P30-3 is P30-0, P30-3, P30-1, and P30-2.

Note that, in the present disclosure, store-and-forward method is assumed, for example. Thus, the packet is input (reception of the packet is started), and after the packet is entirely stored (the rectangular wave rises and falls), processing, such as analysis of the header, is performed, and the packet is transmitted (forwarded).

In a case where the GCL generated by GCL 307 is GCL1[0, 1, 2, 3], the output order of the packets is {P30-0, P30-1, P30-2, P30-3} as illustrated in timing chart TC2 in FIG. 4. In this case, the switch waits for arrival of packet P30-1 after outputting packet P30-0 (after the rectangular wave falls), so that a period in which no packet is output occurs between packets P30-0 and P30-1. Further, packet P30-3 that has arrived earlier is delayed by waiting for output because of arrival of a packet having a higher priority.

In a case where the GCL generated by GCL 307 is GCL2[0, 3, 1, 2], the output order of the packets is {P30-0, P30-3, P30-1, P30-2} as illustrated in timing chart TC3 in FIG. 4. In this case, the output order of the output packets matches the arrival order of the input packets, and the switch can output the packets substantially immediately after the arrival of the input packets (only with an internal processing delay). Thus, as illustrated in arrows A4b in FIG. 4, GCL2[0, 3, 1, 2] has a shorter overall output delay than GCL1[0, 1, 2, 3].

A time from a certain reference time point to transmission of the packet is referred to as a transmission offset. For example, double arrow A4c in FIG. 4 denotes the transmission offset of packet P30-1. The transmission offset may be referred to as a transmission timing.

### <Node Graph>

FIG. 5 is a diagram illustrating an example of a node graph of network system 100 in FIG. 1. Hereinafter, switches 1011 and 1012 may be referred to as switches S1 and S2. Port 1021 of switch 1011 may be referred to as port P1, and port 1022 of switch 1012 may be referred to as port P1. Talkers 1031, 1032, and 1033 may be referred to as talkers T1, T2, and T3, and listener 1034 may be referred to as listener L1.

The node graph indicates a transmission path (route) of the data stream. In the node graph in FIG. 5, talkers T1, T2, and T3 transmit packets, and listener L1 receives the packets. Port P1 of switch S1 relays the packets to switch S2, and port P1 of switch S2 relays the packets to listener L1.

The packets transmitted from talkers T1 and T2 merge at switch S1 and transmitted to switch S2 from port P1 of switch S1. The packet output from switch S1 (the packets output from talkers T1 and T2) merges with the packet transmitted from talker T3 in switch S2 and is transmitted to listener L1 from port P1 of switch S2. That is, in the node graph in FIG. 5, a merge of packets occurs at port P1 of switch S1, and a merge of packets occurs at port P1 of switch S2.

In a case where transmission periods of packets overlap with each other because of a merge of the packets, switches S1 and S2 generate a GCL for scheduling the transmission order of the packets such that the transmission periods of the packets do not overlap with each other. For example, as illustrated in GCL1 and GCL2 in FIG. 4, switches S1 and S2 generate the GCL such that the transmission periods of the packets do not overlap with each other.

As described in FIG. 4, the packets have desired arrival times. Switches S1 and S2 generate a GCL (determine the transmission order of the packets) such that the desired arrival times of the packets are satisfied.

The packet output from the switch does not satisfy the desired arrival time in some cases. For example, there is a case where a packet does not satisfy the desired arrival time even how switch S2 determines the transmission order of the packets. In this case, for example, switch S2 requests switch S1 in the preceding stage to change the transmission order of the packets. Switch S2 regenerates a GCL based on the transmission order of the packets changed by switch S1 in the preceding stage. In a case where the packet satisfies the desired arrival time in the regenerated GCL, switch S2 confirms the transmission order of the packets in the regenerated GCL. That is, the switches schedule a transmission order of packets in a distributed manner in network system 100.

Hereinafter, in a transmission path of packets, a talker side may be referred to as an upstream side, and a listener side may be referred to as a downstream side.

### <Data Configuration of Stream Information>

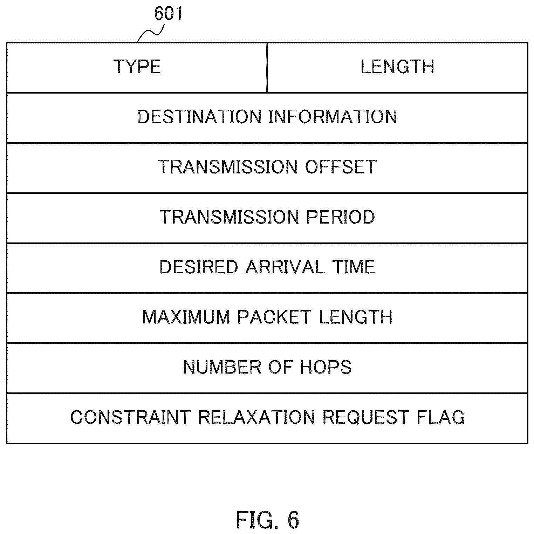

FIG. 6 is a diagram illustrating a data configuration example of stream information 601. As illustrated in FIG. 6, stream information 601 has fields for a type, a length, destination information, a transmission offset, a transmission period, a desired arrival time, a maximum packet length, the number of hops, and a constraint relaxation request flag. The fields of stream information 601 may be included in a dedicated control packet or may be included in a normal data packet.

The type indicates that the fields illustrated in FIG. 6 are the fields of stream information 601. The length denotes a data length (field length) of stream information 601.

An information field related to a transmission constraint of the packet is inserted in stream information 601 subsequent to the type and the length. For example, stream information 601 includes, subsequent to the type and the length, destination information, such as an address or priority indicating the destination of the packet, the transmission offset (transmission start time), the transmission period, the desired arrival time, and the maximum packet length of the packet, the number of hops required to reach the destination of the packet, and the constraint relaxation request flag of the packet.

Stream information 601 is generated by a talker and is transmitted to the downstream side. For example, when it is determined in a switch that the packet does not satisfy the desired arrival time, stream information 601 is transmitted upstream from the switch.

The type, the length, the destination information, the transmission offset, the transmission period, the desired arrival time, and the maximum packet length of stream information 601 are set by a talker. The number of hops is set by, for example, a switch.

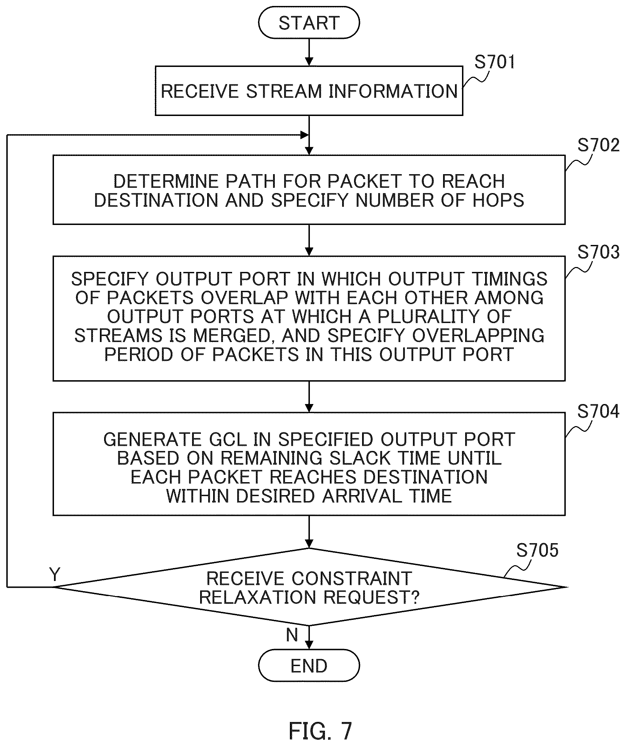

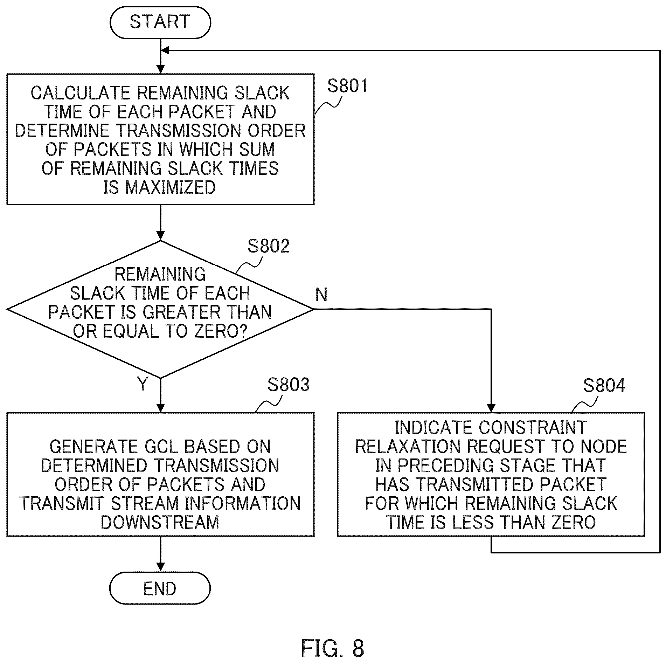

The switch generates a GCL based on stream information 601. Stream information 601 includes a desired arrival time. As will be described in FIGS. 7 and 8, each switch on a path calculates a remaining slack time (a remaining time until the desired arrival time at which the packet arrives at the destination) for a combination of transmission orders of the packets based on the desired arrival time and executes distributed scheduling of the packets.

In a case where packets are merged and transmitted (e.g., see FIGS. 4 and 5), a switch concatenates stream information 601 of each packet in an order of the GCL (transmission order of packets) and transmits the concatenated stream information 601 to a downstream switch. The downstream switch can recognize stream information 601 and the transmission order of each packet merged in the upstream switch through the concatenated stream information 601 and the concatenation order of stream information 601.

In a case where a GCL in which the remaining slack time is greater than or equal to zero cannot be generated, the switch sets the constraint relaxation request flag (e.g., to 1) and transmits the constraint relaxation request flag to the upstream side. The upstream switch that has received stream information 601 in which the constraint relaxation request flag has been set regenerates, for example, a GCL in which the transmission order of the packets is changed and/or changes (reduces) the transmission offset of the packets. The upstream switch transmits stream information 601 based on the regenerated GCL and/or stream information 601 including the changed transmission offset to the downstream switch.

In a case where the packets do not satisfy the desired arrival times (in a case where the remaining slack time is less than zero) even after the upstream switch regenerates the GCL and/or changes the transmission offset, for example, stream information 601 may be traced back to the talker. In this case, for example, in the talker, the destination information (priority), the transmission offset, the transmission period, the desired arrival time, and the maximum packet length are changed (relaxed). For example, the priority of a packet is lowered and/or the transmission offset is shortened. For example, the transmission period and/or the desired arrival time of the packet is lengthened. For example, the maximum packet length is shortened.

Note that, stream information 601 may have information related to the transmission constraint of a plurality of packets or the transmission order determined by the switch. Stream information 601 may have a field indicating for which item a relaxation request is made in the transmission constraint. For example, stream information 601 may have a flag field indicating a request to change the transmission order, a flag field indicating a request to change the transmission offset, and/or a flag field indicating a request to change the desired arrival time.

### <Operation of Switch>

FIG. 7 is a flowchart illustrating an operation example of the switch. The processing of the flowchart illustrated in FIG. 7 may be executed, for example, when network system 100 is built or network system 100 is changed.

A talker transmits (indicates) downstream the stream information related to a packet to be transmitted. A switch receives the stream information transmitted from the talker or another switch (S701).

The switch determines a path for the packet to reach the destination based on the received stream information (S702). The switch also specifies the number of hops indicating the number of nodes to be passed through until the packet reaches the listener as the destination from the switch (S702).

The switch specifies an output port in which arrival times of packets are close to each other and transmission timings of packets overlap with each other among output ports at which a plurality of packets is merged, based on the stream information received in S701 (S703). Further, the switch also specifies an overlapping period (merge period) of packets in the specified output port (S703). For example, the switch specifies the overlapped output timings from a transmission offset, a transmission period, and a maximum packet size of the stream information. Note that, when the input packets illustrated in FIG. 4 are merged and output as they are, the output timings of the packets overlap with each other.

In S703, when specifying the output port in which output timings overlap each other and an overlapped period of packets, the switch generates a GCL in the specified output port based on the remaining slack time until each packet arrives within the desired arrival time (S704). For example, the switch generates a GCL of the output port specified in S703 such that the remaining slack time is greater than or equal to zero. Note that a detail description of S704 will be given in the flowchart in FIG. 8.

The switch determines whether or not the stream information (constraint relaxation request) in which the constraint relaxation request flag has been set is received from a downstream switch (S705). When receiving no constraint relaxation request from the downstream switch (No in S705), the switch ends the processing of the flowchart. When receiving a constraint relaxation request from the downstream switch (Yes in S705), the switch transitions to processing in S702.

FIG. 8 is a flowchart illustrating a detailed operation example of S704 in FIG. 7. The switch calculates, in the output port specified in S703 in FIG. 7, the remaining slack time of each packet based on the desired arrival time and the maximum packet length of each packet of the stream information received in S701 or S705 in FIG. 7 (S801). For example, the switch subtracts, from the desired arrival time, a delay time based on the transmission order of the packets (transmission offset), a time of the maximum packet length, a time based on the number of hops (propagation time) and calculates the remaining slack time of each packet. The switch determines the transmission order of the packets in which the sum of remaining slack times is maximized (S801). Note that, various algorithms can be used for determining the transmission order of packets. For example, various search techniques, such as a branch and bound method used for combinatorial optimization, or metaheuristics such as a genetic algorithm can be used.

The switch determines whether or not the remaining slack time of each packet is greater than or equal to zero in the transmission order determined in S801 (S802). That is, the switch determines whether or not each packet arrives at the listener of the reception destination by the desired arrival time in the transmission order determined in S801.

In a case where there is no packet that does not satisfy the remaining slack time greater than or equal to zero (Yes in S802), the switch generates a GCL based on the transmission order determined in S801 (S803). The switch generates stream information based on the generated GCL and transmits the stream information to the downstream side (S803).

In a case where there is a packet that does not satisfy the remaining slack time greater than or equal to zero (No in S802), the switch indicates a constraint relaxation request to the switch in the preceding stage that has transmitted the packet not satisfying the condition (the packet having the remaining slack time less than or equal to zero) (S804). The switch transitions to processing in S801. That is, the switch transmits the stream information (see FIG. 6) in which the constraint relaxation request flag has been set to the switch in the preceding stage and regenerates a GCL.

Note that, the constraint relaxation request is indicated to the preceding stage by tracing the switch until the remaining slack time is satisfied for each packet. In a case where the remaining slack time is not satisfied by adjustment between the switches, the constraint relaxation request reaches the talker. The talker that has received the constraint relaxation request may indicate to the user that a change as an application is required.

As described above, each switch performs scheduling of packets by targeting packets merged in each switch and a merge period in which a timing conflict occurs. When performing the scheduling in which a packet cannot satisfy the desired arrival time, each switch makes a constraint relaxation request to the upstream switch. That is, each switch partially observes (determines) overlapping of packets in the entirety of network system 100 and performs scheduling in a distributed manner in the entirety of network system 100.

For example, the upstream switch indicates the desired arrival time of each packet to the downstream switch. The downstream switch calculates the remaining slack time of the packets based on the indicated desired arrival times and determines the transmission order of the packets. In a case where the packets cannot satisfy the desired arrival times in the determined transmission order, the downstream switch makes a constraint relaxation request to the upstream switch.

The upstream switch receives, without considering a merge of streams in downstream switches, the indication of the constraint relaxation request in an order from the downstream switch that does not satisfy the remaining slack time. Accordingly, the switch can adjust the schedule in a distributed manner between the switches. In a case where the transmission constraint is not satisfied anyhow, the switch can indicate to the application or the user of the talker that the transmission constraint is not satisfied.

### <Sequence>

· Sequence in which no constraint relaxation request is made

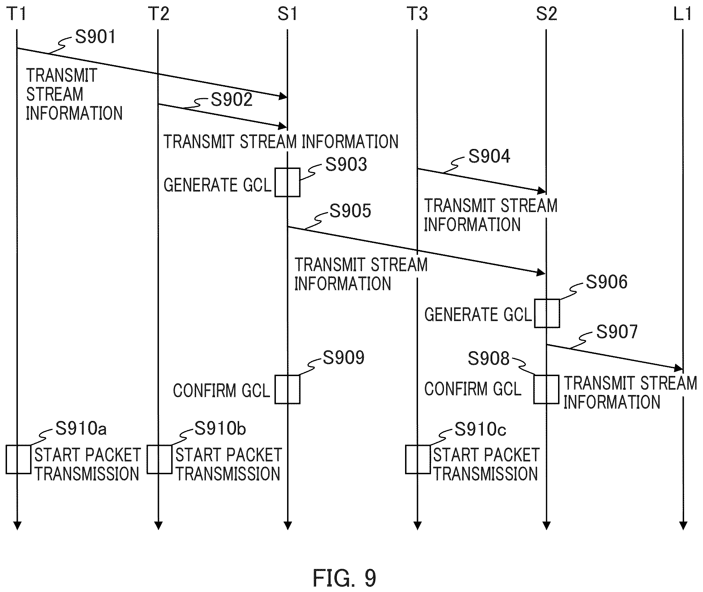

FIG. 9 is a diagram illustrating a sequence example in which no constraint relaxation request is made. The sequence example in the node graph in FIG. 5 will be described in FIG. 9. T1, T2, and T3 illustrated in FIG. 9 correspond to talkers T1, T2, and T3 described in FIG. 5. S1 and S2 illustrated in FIG. 9 correspond to switches S1 and S2 described in FIG. 5. L1 illustrated in FIG. 9 corresponds to listener L1 described in FIG. 5.

Talker T1 transmits stream information prior to transmitting a packet to listener L1 (S901).

Talker T2 transmits stream information prior to transmitting a packet to listener L1 (S902).

Switch S1 receives the stream information transmitted in S901 and S902. Switch S1 determines that the packets transmitted from talkers T1 and T2 merge and that the merge periods overlap with each other, based on the received stream information and generates a GCL of the packets (S903).

Talker T3 transmits stream information prior to transmitting a packet to listener L1 (S904).

Switch S1 generates stream information based on the GCL generated in S903 and transmits the stream information to switch S2 positioned downstream (S905).

Switch S2 receives the stream information transmitted in S904 and S905. Switch S2 determines that the packets transmitted from talker T3 and switch S1 are merged and that the merge periods overlap with each other, based on the received stream information and generates a GCL of the packets (S906).

Switch S2 generates stream information based on the GCL generated in S906 and transmits the stream information to listener L1 located downstream (S907).

In a case where no constraint relaxation request is indicated from listener L1 in the subsequent stage, switch S2 confirms the GCL generated in S906 (S908). Switch S2 performs gate control on the packets transmitted from upstream, using the confirmed GCL.

In a case where no constraint relaxation request is indicated from switch S2 in the subsequent stage, switch S1 confirms the GCL generated in S903 (S909). Switch S1 then performs gate control on the packets transmitted from upstream, using the confirmed GCL.

Talkers T1, T2, and T3 start transmitting the packets unless a constraint relaxation request is indicated (S910a, S910b, S910c).

As described above, network system 100 can propagate scheduling of packets for each destination in order from the preceding stage on the path. Thus, network system 100 can perform, in a distributed manner, efficient gate time assignment in which an unnecessary waiting time is suppressed.

The processing order is not limited to the example in FIG. 9. For example, the processing order for S901 and S902, the processing order for S904 and S905, and the processing order for S908 and S909 may be switched.
· Sequence in which constraint relaxation request is made between switches

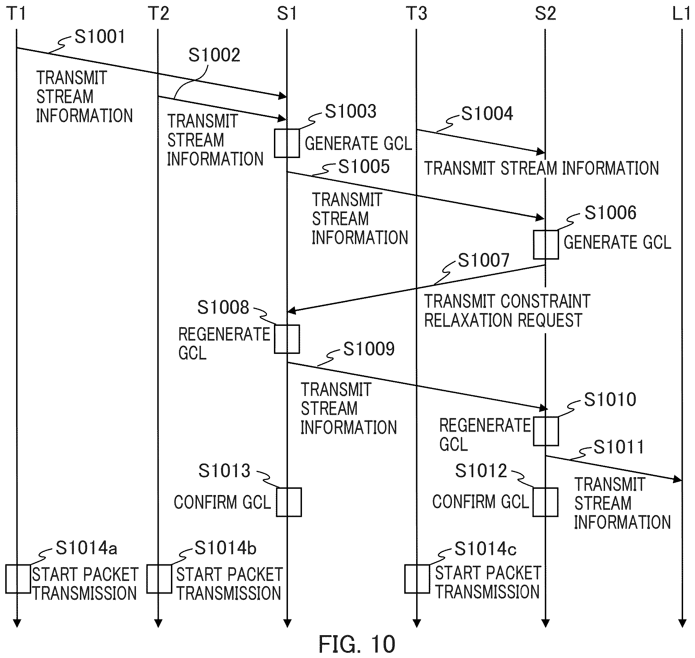

FIG. 10 is a diagram illustrating a sequence example in which a constraint relaxation request is made between switches. The sequence example in the node graph in FIG. 5 will be described in FIG. 10, as in FIG. 9.

Talker T1 transmits stream information prior to transmitting a packet to listener L1 (S1001).

Talker T2 transmits stream information prior to transmitting a packet to listener L1 (S1002).

Switch S1 receives the stream information transmitted in S1001 and S1002. Switch S1 determines that the packets transmitted from talkers T1 and T2 merge and that the merge periods overlap with each other, based on the received stream information and generates a GCL of the packet (S1003).

Talker T3 transmits stream information prior to transmitting a packet to listener L1 (S1004).

Switch S1 generates stream information based on the GCL generated in S1003 and transmits the stream information to switch S2 located downstream (S1005).

Switch S2 receives the stream information transmitted in S1004 and S1005. Switch S2 determines that the packets transmitted from talker T3 and switch S1 merge and that the merge periods overlap with each other, based on the received stream information and generates a GCL of the packet (S1006).

Switch S2 determines that, for example, the packet transmitted from talker T1 does not satisfy the remaining slack time (the remaining slack time is not greater than or equal to zero) in the GCL generated in S1006 and transmits a constraint relaxation request to switch S1 in the preceding stage that transmits (relays) the packet not satisfying the remaining slack time (S1007). That is, switch S2 transmits the stream information in which the constraint relaxation request flag is set to switch S1.

When receiving the constraint relaxation request from switch S2 in the subsequent stage, switch S1 regenerates a GCL (S1008). For example, in a case where the remaining slack time is satisfied by changing the transmission order of the packets between talker T1 and talker T2, a GCL in which the transmission order of the packets is switched is regenerated.

Switch S1 generates stream information based on the GCL regenerated in S1008 and transmits the stream information to switch S2 located downstream (S1009).

Switch S2 receives the stream information transmitted in S1009. Switch S2 regenerates a GCL of the packet based on the stream information transmitted in S1009 and the stream information transmitted in S1004 (S1010). Here, switch S2 regenerates a GCL that satisfies the remaining slack time.

Switch S2 generates stream information based on the GCL regenerated in S1010 and transmits the stream information to listener L1 located downstream (S1011).

Unless a constraint relaxation request is indicated from listener L1 in the subsequent stage, switch S2 confirms the GCL regenerated in S1010 (S1012). Switch S2 then performs gate control on the packets transmitted from upstream, using the confirmed GCL.

Unless a constraint relaxation request is indicated from switch S2 in the subsequent stage, switch S1 confirms the GCL regenerated in S1008 (S1013). Switch S1 then performs gate control on the packets transmitted from upstream, using the confirmed GCL.

Talkers T1, T2, and T3 start transmitting the packets unless a constraint relaxation request is indicated (S1014a, S1014b, S1014c).

As described above, network system 100 executes scheduling of packets for each destination in order from upstream on the path and indicates a constraint relaxation request to the node in the preceding stage at a stage in which the transmission constraint is no longer satisfiable. That is, network system 100 propagates re-scheduling in reverse from downstream to upstream. Thus, network system 100 can perform, in a distributed manner, efficient gate time assignment in which an unnecessary waiting time is suppressed.

The processing order is not limited to the example in FIG. 10. For example, the processing order for S1001 and S1002, the processing order for S 1004 and S1005, and the processing order for S1012 and S1013 may be switched.
· Sequence in which constraint relaxation request is made to talker

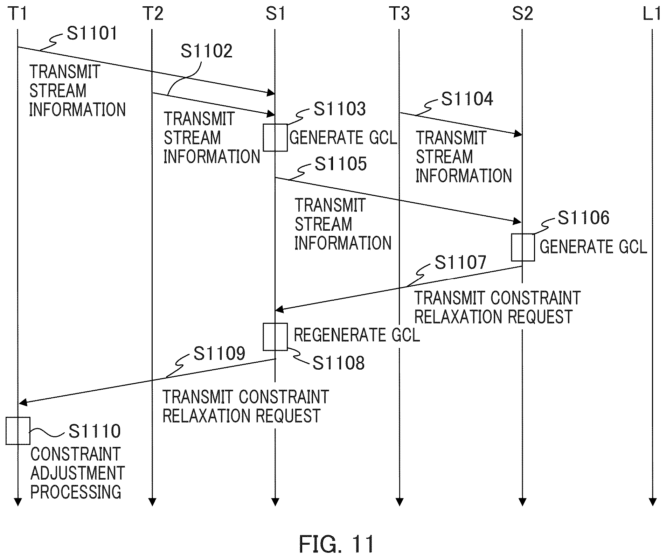

FIG. 11 is a diagram illustrating a sequence example in which a constraint relaxation request is made to a talker. The sequence example in the node graph in FIG. 5 will be described in FIG. 11, as in FIG. 9.

Talker T1 transmits stream information prior to transmitting a packet to listener L1 (S1101).

Talker T2 transmits stream information prior to transmitting a packet to listener L1 (S1102).

Switch S1 receives the stream information transmitted in S1101 and S1102. Switch S1 determines that the packets transmitted from talkers T1 and T2 merge and that the merge periods overlap with each other, based on the received stream information and generates a GCL of the packets (S1103).

Talker T3 transmits stream information prior to transmitting a packet to listener L1 (S1104).

Switch S1 generates stream information based on the GCL generated in S1103 and transmits the stream information to switch S2 located downstream (S1105).

Switch S2 receives the stream information transmitted in S1104 and S1105. Switch S2 determines that the packets transmitted from talker T3 and switch S1 merge and that the merge periods overlap with each other, based on the received stream information and generates a GCL of the packets (S1106).

Switch S2 determines that, for example, the packet transmitted from talker T1 does not satisfy the remaining slack time (the remaining slack time is not greater than or equal to zero) in the GCL generated in S1106 and transmits the constraint relaxation request to switch S1 in the preceding stage that transmits (relays) the packet not satisfying the remaining slack time (S1107). That is, switch S2 transmits the stream information in which a constraint relaxation request flag is set to switch S1.

When receiving the constraint relaxation request from switch S2 in the subsequent stage, switch S1 regenerates a GCL (S1108).

In a case where the remaining slack time in switch S2 is not satisfied by regenerating a GCL, switch S1 transmits a constraint relaxation request to talker T1 in the preceding stage (the talker that transmits the packet not satisfying the remaining slack time in switch S2) (S1109). In a case where the remaining slack time in switch S2 is not satisfied by switching the transmission order of the packets between talker T1 and talker T2, for example, switch S1 transmits a constraint relaxation request to talker T1 in the preceding stage. That is, switch S1 transmits the stream information in which the constraint relaxation request flag is set to talker T1 in the preceding stage.

When receiving the constraint relaxation request transmitted in S1109, talker T1 determines that the packet transmission is not possible due to the transmission constraint (see the description of FIG. 6) of the stream information transmitted in S1101 and executes constraint adjustment processing (application) (S1110). Talker T1 changes the transmission constraint by the constraint adjustment processing and generates stream information based on the changed transmission constraint. Talker T1 then transmits downstream the generated stream information (not illustrated). Note that, Talker T1 may indicate to the user through a user interface that the remaining slack time of switch S2 is not satisfied, when the remaining slack time of switch S2 is not satisfied even with the stream information based on the transmission constraint that has been changed through the constraint adjustment processing. The user may then perform constraint adjustment.

As described above, network system 100 executes scheduling in order from upstream on the path for the streams of each destination and indicates a constraint relaxation request to the node in the preceding stage at a stage in which the transmission constraint is no longer satisfiable. That is, network system 100 propagates re-scheduling in reverse from downstream to upstream. When the scheduling cannot be adjusted between switches, the indication of a constraint relaxation request is traced to the talker, and the adjustment is performed at the talker, or the indication of a constraint relaxation request is given to the user. Thus, network system 100 can perform, in a distributed manner, efficient gate time assignment in which an unnecessary waiting time is suppressed. Further, as will be described later, since information about which packet is causing congestion for the bandwidth (time) and/or the like can be indicated together, the user can easily recognize a location where adjustment of the transmission constraint at the talker and/or a design change of network 100 is necessary.

Note that, the processing order is not limited to the example in FIG. 11. For example, the processing order for S1101 and S1102 and the processing order for S1104 and S1105 may be switched.

### <User Interface>

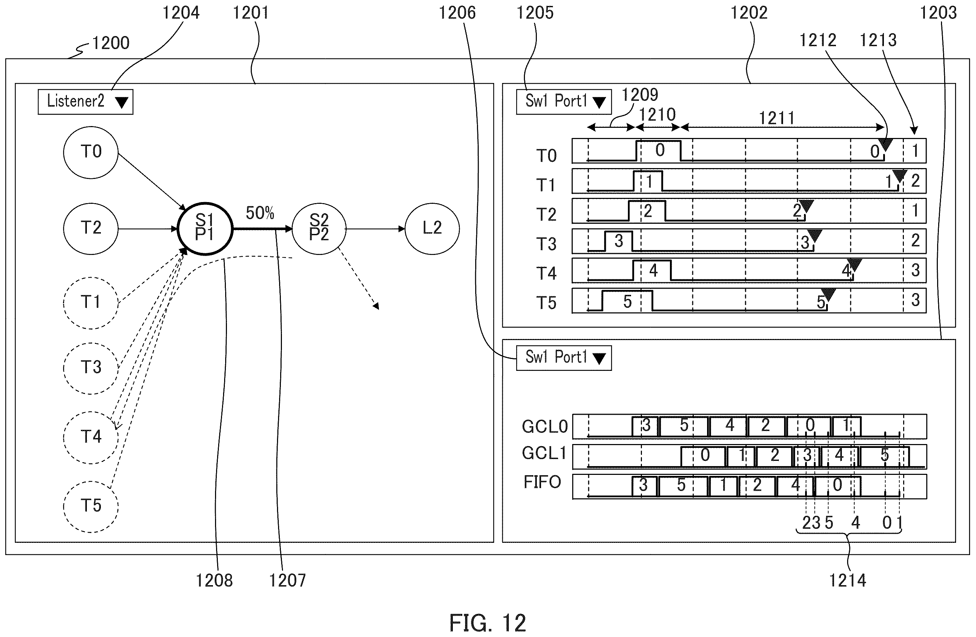

FIG. 12 is a diagram illustrating an example of the user interface. Graphical User Interface (GUI) screen 1200 illustrated in FIG. 12 may be displayed on, for example, a display included in the network device. GUI screen 1200 may be displayed on, for example, a display of an information processing apparatus, such as a PC connected to the network device. GUI screen 1200 may be displayed on, for example, a display of an information processing apparatus, such as a PC on which a program that simulates the configuration and the operation described above is implemented.

As illustrated in FIG. 12, GUI screen 1200 includes path display 1201, input display 1202, output display 1203, node selector 1204, and port selectors 1205 and 1206. T0 to T5 illustrated in FIG. 12 indicate the talkers. S1 and S2 indicate the switches. P1 indicates the port of switch S1, and P2 indicates the port of switch S2. L2 indicates the listener.

When the listener is selected using node selector 1204, a path of a data stream in which the selected listener is the destination is displayed on path display 1201.

For example, in FIG. 12, when listener L2 (Listener2) is selected, talkers T0 and T2 having listener L2 as the destination of the packets are displayed by solid lines. Further other data streams that merge and/or branch out in the middle of the path and the nodes are displayed by dotted lines. That is, the other data streams and transmission nodes that affect the target data streams indicated by the solid lines are displayed by the dotted lines. For example, in FIG. 12, the data streams of talkers T1, T3, T4, and T5 not having listener L2 as the destination merge on an edge that connects port P2 of switch S2 from port P1 of switch S1, and the data streams of talkers T1, T3, T4, and T5 branch out to a port different from port P2 of switch S2.

When an edge connecting nodes is selected, the edge is highlighted, and a bandwidth (time) occupancy ratio of the edge is displayed. For example, in FIG. 12, when edge 1207 is selected, a bandwidth occupancy ratio of edge 1207, "50%" is displayed. Accordingly, the user can easily recognize which edge is congested and how much margin is there.

When a constraint relaxation request is made between nodes during the course of scheduling, an image indicating through which path the constraint relaxation request is propagated is displayed. For example, as illustrated in constraint relaxation request display 1208 in FIG. 12, the constraint relaxation request is indicated to talker T4 from port P2 of switch S2 through port P1 of switch S1. Accordingly, the user can easily recognize a state, such as which data stream of which path is causing congestion for the bandwidth constraint and where the congestion occurs.

When a node displayed on port selector 1205 or path display 1201 is selected, timing charts of the packets input to the port of the selected node are displayed on input display 1202. For example, in FIG. 12, timing charts of packets of talkers T0 to T5 input to port P1 (Sw1 Port1) of switch S1 are displayed.

Double arrow 1209 in FIG. 12 indicates a transmission offset of the packet of talker T0. Double arrow 1210 indicates the maximum packet length of the packet of talker T0. Double arrow 1211 indicates the remaining slack time. Triangular marker 1212 indicates the desired arrival time. The number indicated by arrow 1213 denotes the number of hops remaining from switch S1 to the destination. For example, the packets of talkers T0 and T2 in switch S1 reach listener L2 as the destination in one remaining hop.

A rising portion, a falling portion, and the triangular marker of a rectangular wave in each timing chart of input display 1202 may be moved left and right by the user using the rising portion, the falling portion, and the triangular marker as handles. That is, the user may adjust the transmission constraint by operating the rising portion, the falling portion, and the triangular marker portion of the rectangular wave.

When a node displayed on port selector 1206 or path display 1201 is selected, a candidate for a schedule (GCL) set for the port of the selected node and a timing chart of an output packet in the GCL are displayed on output display 1203.

For example, in FIG. 12, scheduling candidates for GCLO, GCL1, and FIFO are displayed. Further, a timing chart indicating how the packets of talkers T0 to T5 input into port P1 (Sw1 Port1) of switch S1 are output in each of GCLO, GCL1, and FIFO is displayed.

Number 1214 illustrated in FIG. 12 indicates the desired arrival times of talkers T0 to T5. In GCLO, the packets are output in the following order of talkers {T3, T5, T4, T2, T0, and T1}. In GCLO, all the packets of talkers T0 to T5 satisfy the desired arrival time (the remaining slack time is greater than or equal to zero).

In GCL1, the packets are output in the following order of talkers {T0, T1, T2, T3, T4, and T5}. In GCL1, the packets of talkers T3, T4, and T5 do not satisfy the desired arrival time.

In FIFO, the packets are output in the following order of talkers {T3, T5, T1, T2, T4, and T0}. In FIFO, all the packets of talkers T0 to T5 satisfy the desired arrival time.

The packet that does not satisfy the desired arrival time may be highlighted in, for example, red. Accordingly, the user can easily recognize, for example, in what order and when the packets are transmitted with what degree of the remaining slack time and whether or not an unnecessary waiting time has occurred in a plurality of scheduling candidates.

In each timing chart of output display 1203, the packets may be moved left and right by the user using a transmission packet label as a handle. That is, the user may adjust the transmission order of the packets.

Providing a network device or a simulator with the user interface illustrated in FIG. 12 allows the user to easily recognize how data streams merge and/or branch out, which edge is congested, and how much margin is there in the bandwidth. Further, the user can easily recognize a state, such as which data stream of which path is causing congestion for the bandwidth constraint and where the congestion occurs. Furthermore, a state, such as which data stream of which path is causing congestion for the bandwidth constraint and where the congestion occurs can be easily recognized. How long is the remaining slack time, whether or not an unnecessary waiting time has occurred, and the like can be easily recognized. In addition, enabling each portion of the time chart to be operable as a handle allows the user to easily operate and/or adjust transmission constraint information.

### <Summary of Embodiment>

As described above, a switch constituting a network in TSN includes: receiver 201 that receives, from an upstream network device, constraint information related to a constraint of transmission and reception of a packet; and controller 202 that determines a transmission order of a plurality of packets based on the constraint information of each of the plurality of packets in a case where transmission timings of the plurality of packets to be transmitted to a downstream network device overlap with each other. Controller 202 requests the upstream network device to change the constraint information when the constraint information of the plurality of packets cannot be satisfied in determining the transmission order.

According to this configuration, the switch constituting the network determines the transmission order of the packets in order from upstream of the network. In the determined transmission order, the switch constituting the network indicates, to the upstream network device, a relaxation request for the constraint information at a stage in which the constraint information is no longer satisfiable. Accordingly, the switch can appropriately schedule data streams without observing the data streams in the entire network and knowing a state of a timing conflict in the entire network.

In addition, the network device or the simulator constituting the network displays a node graph of network devices constituting the network, displays a timing chart of input packets of the network device selected on the node graph, displays a timing chart of output packets in the transmission order determined based on the constraint information related to the constraint of the transmission and the reception of the input packets, and displays, on the node graph, an indication path of a request to change the constraint information transmitted by the network device that cannot satisfy the constraint information of the input packets in determining the transmission order of the output packets.

According to this configuration, the user can easily know in what transmission order the output packets are scheduled in the network devices. In addition, the user can easily recognize a state, such as which network device is causing congestion for the bandwidth constraint.

Although the embodiments have been described above with reference to the accompanying drawings, the present disclosure is not limited to such examples. It is obvious that a person skilled in the art can arrive at various variations and modifications within the scope described in the claims. It is understood that such variations and modifications also belong to the technical scope of the present disclosure. Further, components in the embodiments described above may be optionally combined without departing from the spirit of the present disclosure.

In the embodiments described above, the notation "... processor", "... -er", "... -or" or "... -ar" used for each component may be replaced with another notation such as "... circuitry", "... assembly", "... device", "... unit" or "... module".

The present disclosure can be realized by software, hardware, or software in cooperation with hardware. Each functional block used in the description of each embodiment described above can be partly or entirely realized by an LSI such as an integrated circuit, and each process described in the embodiment may be controlled partly or entirely by the same LSI or a combination of LSIs. The LSI may be individually formed as chips, or one chip may be formed so as to include part or all of the functional blocks. The LSI may include a data input and output coupled thereto. The LSI here may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be represented as a control method executed in a radio communication apparatus or a control apparatus. In addition, the present disclosure can also be expressed as a program for causing a computer to operate the control method. Furthermore, the present disclosure can also be expressed as a recording medium on which the program is recorded in a state readable by a computer. For example, the present disclosure can be expressed in any category of apparatus, method, program, or recording medium.

The present disclosure can be realized by any kind of apparatus, device or system having a function of communication, which is referred to as a communication apparatus. The communication apparatus may comprise a transceiver and processing/control circuitry. The transceiver may include and/or function as a receiver and a transmitter. The transceiver, as the transmitter and receiver, may include a radio frequency (RF) module including amplifiers, RF modulators/demodulators and the like, and one or more antennas. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote healthcare and medicine prescription) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may include a device such as a controller or a sensor which is coupled to a communication device performing communication functions described in the present disclosure. For example, the communication apparatus may include a controller or a sensor that generates control signals or data signals which are used by a communication device performing communication functions of the communication apparatus.

The communication apparatus also may include an infrastructure facility, such as a base station, an access point, and any other apparatus, device or system that communicates with or controls various apparatuses such as those in the above non-limiting examples.

The specific examples of the present disclosure have been described in detail above, but these specific examples are mere examples and do not limit the appended claims. The technology described in the appended claims embraces various modifications and changes made in the specific examples described above.

The disclosed contents of the specification, the drawings, and the abstract included in Japanese Patent Application No. 2023-073511 filed on April 27, 2023 are entirely incorporated in the present application by reference.

### Industrial Applicability

The present disclosure is useful for a technique adjusting a network in which TSN is introduced.

### Reference Signs List

100 Network system
1011, 1012, S1, S2 Switch
1021, 1022, P1, P2 Port
1031 to 1033, T1 to T3 Talker
1034, L1 Listener
200 Network device
201 Receiver
202 Controller
203 Transmitter
204 UI
205 Storage
301 Input port
302 Destination filter
303 Queue
304 Gate
305 Output port
306 Scheduler
307 GCL

## Claims

1. A network device constituting a network, the network device comprising:
a receiver that receives, from an upstream network device, constraint information related to a constraint of transmission and reception of a packet; and
a controller that determines, when transmission timings of a plurality of packets to be transmitted to a downstream network device overlap with each other, a transmission order of the plurality of packets, based on the constraint information of each of the plurality of packets,
wherein, the controller requests an upstream network device to change the constraint information, when satisfying the constraint information of the plurality of packets is impossible, in determining the transmission order.

2. The network device according to claim 1, wherein, the controller changes, based on a request to change the constraint information from the downstream network device, the constraint information of at least one of the plurality of packets to be transmitted to the downstream network device.

3. The network device according to claim 1, wherein, the controller calculates, in each of the plurality of packets, a remaining time until arrival at a destination network device, based on the constraint information, and determines the transmission order such that the remaining time is greater than or equal to zero.

4. The network device according to claim 3, wherein, the controller determines the transmission order such that a sum of a plurality of the remaining times respectively in the plurality of packets is maximized.

5. The network device according to claim 3, wherein, the controller requests the upstream network device that transmits at least one of the plurality of packets for which it is impossible to make the remaining time equal to or greater than zero to change the constraint information.

6. The network device according to claim 3, wherein,
the constraint information includes a desired arrival time of the packet, and a maximum packet length, and
the controller subtracts, from the desired arrival time, a delay time based on the transmission order of the plurality of packets, a time of the maximum packet length, and a time based on the number of hops to a destination of the packet to calculate the remaining time.

7. A scheduling method for a network device constituting a network, the scheduling method comprising:
receiving, from an upstream network device, constraint information related to a constraint of transmission and reception of a packet;
determining, when transmission timings of a plurality of packets to be transmitted to a downstream network device overlap with each other, a transmission order of the plurality of packets based on the constraint information of each of the plurality of packets; and
requesting an upstream network device to change the constraint information, when satisfying the constraint information of the plurality of packets is impossible, in the determining of the transmission order.

8. A program for a network device constituting a network, the program causing a processor to execute processing comprising:
receiving, from an upstream network device, constraint information related to a constraint of transmission and reception of a packet;
determining, when transmission timings of a plurality of packets to be transmitted to a downstream network device overlap with each other, a transmission order of the plurality of packets based on the constraint information of each of the plurality of packets; and
requesting an upstream network device to change the constraint information, when satisfying the constraint information of the plurality of packets is impossible, in the determining of the transmission order.

9. A node graph display method, comprising:
displaying a node graph of a network device constituting a network;
displaying a timing chart of an input packet of the network device selected on the node graph;
displaying a timing chart of an output packet in a transmission order determined based on constraint information related to a constraint of transmission and reception of the input packet; and
displaying, on the node graph, an indication path of a request to change the constraint information transmitted by the network device not capable of satisfying the constraint information of the input packet, in determining the transmission order of the output packet.
